# EUROPÄISCHE PATENTSCHRIFT

(11) **EP 3 472 565 B1**
(45) Veröffentlichungstag und Bekanntmachung des Hinweises auf die Patenterteilung: **02.11.2022**
(21) Anmeldenummer: 17733964.5
(22) Anmeldetag: 13.06.2017
(51) Int. Cl.: G01D 5/20, G01D 5/22, H01F 5/00, H01F 27/28, H02K 11/20

(54) **INDUKTIONSANORDNUNG**
INDUCTION ARRANGEMENT
ENSEMBLE À INDUCTION

(30) Priorität: 14.06.2016 DE 202016003727 U
(43) Veröffentlichungstag der Anmeldung: 24.04.2019
(73) Patentinhaber: Haas, Peter, 70565 Stuttgart (DE)
(72) Erfinder: Haas, Peter, 70565 Stuttgart (DE)
(86) Internationale Anmeldenummer: PCT/EP2017/000690
(87) Internationale Veröffentlichungsnummer: WO 2017/215786

(56) Entgegenhaltungen:
- EP-A1- 2 428 773
- EP-A1- 2 743 649
- EP-B1- 2 428 773
- EP-B1- 2 743 649
- DE-A1- 19 757 689
- DE-C2- 19 757 689
- DE-U1- 9 421 122
- US-A1- 2013 090 890

## Beschreibung

Die Erfindung bezieht sich auf eine Vorrichtung gemäß Anspruch 1 zum effizienteren Einsatz von Induktivitäten in der Elektrotechnik. Induktion entsteht durch die Veränderung eines Magnetfeldes in Bezug auf einen im Raum festgelegten Ort und wurde von Michael Faraday zum ersten Mal wissenschaftlich beschrieben. Der Bezug ist dadurch charakterisiert, dass eine der dreidimensionalen Vektorkomponenten der Feldlinien senkrecht auf einer in einem bestimmten Ort im Raum befindlichen Fläche steht, wobei die Fläche durch eine geschlossene Linie eingeschlossen ist. Wird entlang dieser Linie ein elektrischer Leiter gespannt und kurzgeschlossen, dann wird durch das sich ändernde Magnetfeld in diesem Leiter ein Strom induziert. Die Veränderung des Feldes kann durch verschiedene Maßnahmen erfolgen. Eine dieser vielen Möglichkeiten ist zum Beispiel die Bewegung eines Permanentmagneten mit seinem statischen Magnetfeld - mit räumlich feststehender Raum-Richtung der Dipole des Magneten - an dem im Raum festgelegten Ort vorbei. An diesem Ort findet durch die Bewegung des Magnetfeldes und die damit verbundene Änderung der Stärke des Magnetfeldes eine Änderung der magnetischen Flussdichte statt. Eine an diesem Ort befindliche Spule (Induktivität) - bestehend aus einem strom-leitfähigen Material mit einer runden oder andersartigen Querschnittsgeometrie, wobei der Durchmesser des Querschnitts vergleichsweise klein in Relation zur Länge des Leitermaterials ist, und zusätzlich als notwendige Bedingung der Leiter der Spule wie oben beschrieben eine Fläche einschließt - erfährt eine Änderung der Flussdichte, und wenn eine der Vektorkomponenten dieses Flusses senkrecht auf der oben beschriebenen Fläche steht, entsteht durch die Änderung des magnetischen Flusses in einem solchen eine Fläche einschließenden oder umschließenden Leiters in dem Leiter ein elektrischer Strom, wenn die Leiterenden einer solchen Anordnung geschlossen sind, bzw. eine elektrische Spannung an den Leiterenden, wenn die Leiterenden geöffnet sind.

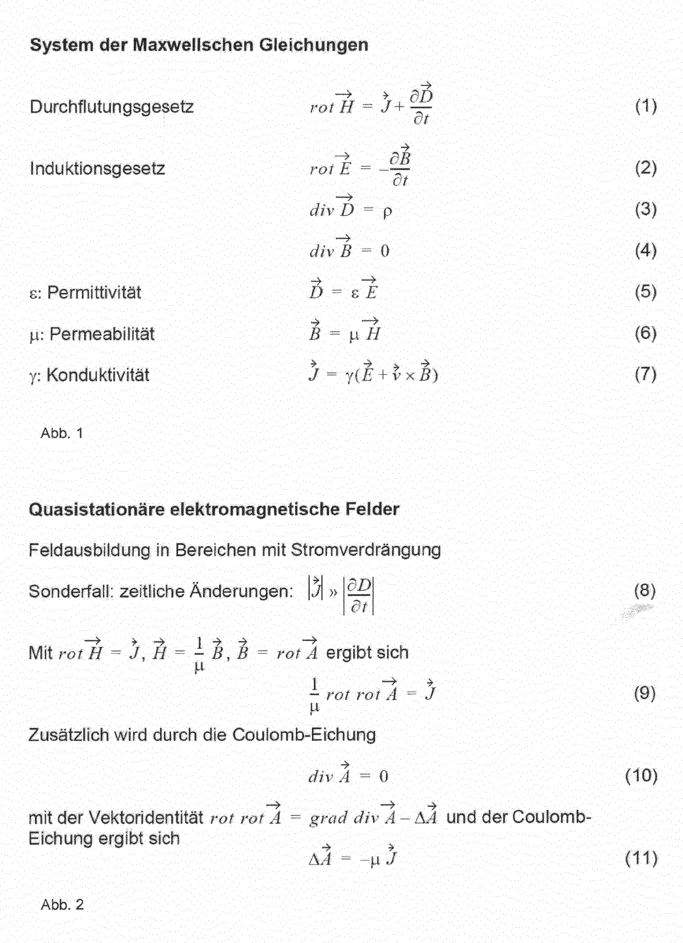

Der Zusammenhang der Größen von magnetischer Flussänderung und elektrischem Strom in einem solchen spulenförmigen Leiter wird durch das Induktionsgesetz und durch die Maxwellschen Gleichungen beschrieben, Abb. 1.

Die Feldtheorie erklärt, dass elektrische und magnetische Felder zwei Erscheinungsformen desselben Phänomens sind, weshalb es viele Möglichkeiten gibt, die Wechselwirkungen elektrischer und magnetischer Felder für viele unterschiedliche Anwendungen technisch zu nutzen.

Der Stand der Technik beschreibt, dass eine der Möglichkeiten, diese Effekte technisch zu nutzen, die rotierende Bewegung eines Gleichstrom-durchflossenen Leiters rund um einen im Raum feststehenden Permanentmagneten als ein Beispiel für die Wirkungsweise eines Gleichstrommotors dient. Nach einer Drehung um 180° muss in diesem Fall die Stromrichtung geändert werden, damit der Rotor nicht nach einer halben Drehung stehen bleibt.

Magnetische Flussdichte-Änderung lässt sich außerdem durch die Rotation eines magnetischen Dipols erzeugen, sowie durch stromdurchflossene geschlossene elektrische Leiter mit einer sich ändernden Stromstärke, zum Beispiel durch das Anlegen einer Wechselspannungsquelle an einer Spule bzw. Induktivität. Das Maß für die Wirkung einer induktiven Anordnung hat die Einheit [VsA⁻¹], genannt Henry oder H. Dieses Maß bestimmt zusammen mit dem Wirkwiderstand des jeweiligen Leiters - vorgegeben durch dessen Querschnitt, den spezifischen Realwiderstand des Leitermaterials und dessen Länge - das Verhältnis von Strom und Spannung im Leiter bzw. an definierten Endpunkten des Leiters eines Spulenkörpers. Ein Leiter eines Spulenkörpers kann dann als geschlossen bezeichnet werden im Sinne des vollständigen Einschlusses einer Fläche, wenn die Enden des eine Fläche einschließenden Leiters sich in welcher Form auch immer im Raum durch Umschlingung überschneiden. Eine solche Überschneidung kann auch an den Enden einer einzigen Spulenwindung hergestellt werden. Die Windungszahl der Spule beträgt in diesem Fall n=1. Sind die Leiterenden geschlossen, fließt in der Spule bei Flussänderung ein Kreisstrom oder Kurzschlussstrom, wenn der Fluss-Vektor eine Komponente senkrecht zu der Fläche hat, welche der Leiter umschließt.

Induktivitäten in Form von Leiterdraht-Spulen finden in vielen elektrischen Schaltungen als Übertrager bzw. Transformatoren zur Änderung der Spannung Verwendung, in elektrischen Maschinen unterschiedlichster Bauart und Betriebsweise als Gleichstrom-, Wechsel- oder Drehstrom-Synchron- und Asynchronmaschinen, für Rotationsantriebe und Linearantriebe und auch in Messeinrichtungen Verwendung. Ein typisches Beispiel einer kurzgeschlossenen Leiteranordnung ist der Käfigläufer einer Asynchronmaschine. Ein typisches Beispiel für Messeinrichtungen ist die Rogowski-Spule, ein rotationstorus-förmig gewickelter Spulendraht, welcher die in einem elektrischen Leiter stattfindende Änderung der Stromstärke diagnostiziert, womit es möglich ist, die Stromstärke eines Wechselstromes in einem stromdurchflossenen Leiter von außen oder die Änderung eines Gleichstroms zu messen, ohne in den Stromkreislauf durch Messen der Spannung eingreifen zu müssen, was eine gegebene elektrische Schaltung unter Umständen signifikant beeinflussen würde. Ziel ist es dabei immer, die Messströme so klein wie möglich zu halten, damit durch Gegeninduktivitätseffekte keine Veränderung des zu messenden Stromes bewirkt wird.

Solche Spulen werden jedoch sehr aufwändig teilweise mit relativ komplizierten und entsprechend aufwändigen automatischen Verfahren oder gar von Hand gewickelt, und sind deshalb teuer in der Herstellung. Weniger aufwändig erwiesen sich mit der aufkommenden Entwicklung von Leiterplatinen mit Hilfe von entsprechenden Lithographie- und Ätzverfahren Spulen, die auf zweidimensionaler Ebene auf möglichst dünne und biegsame Folien gedruckt und im Raum so angeordnet werden, so dass die Spulen in die Lage versetzt werden, magnetischen Fluss gemäß des Induktionsgesetzes rotE(Vektor) = -dB(Vektor)/dt zu umschließen. Jede dieser spiralförmig aufgedruckten Spulenanordnungen hat dabei eigene Anschlüsse für den Eingang und Ausgang der Spulenleiter (DE 4105999).

Ein weiteres Beispiel sind Messspulen für die Wegmessung, mit denen auch stationäre Wegzustände erfasst werden können, wenn zum Beispiel in einem asymmetrisch gewickelten Zylinder-Spulenkörpersystem zweier gegenläufig angeordneten Spulen ein metallischer Körper positioniert wird, welcher durch seine Präsenz an einer bestimmten Stelle die Induktivitäten der Spulen beeinflusst bzw. verändert. Der Unterschied der Induktivitäten der beiden Spulen ist ein Maß für die Positionierung zum Beispiel eines magnetisierbaren Probekörpers auf der x-Achse einer zylindrischen Spulenanordnung, ein Beispiel ist die EP 1 158 266 und die DE 200 09 335. Solche Wegmesser oder Wegsensoren werden beispielsweise für die Zustandsmessung von Aktoren eingesetzt, um die jeweils zu einem Zeitpunkt aktuelle Einstellung eines Aktors zu messen und einem Kontrollsystem als Zustandsgröße zu melden. Dies ist unter anderem wichtig in Regelkreisen, welche den aktuellen Zustand der Einstellung von Systemgrößen wissen müssen, wie zum Beispiel die Einstellung eines hydraulischen Zylinders für die kontrollierte computergeregelte Bewegung der Landeklappe eines Flugzeugs bei der Landung oder ähnliches, so wie in WO 2013/064651 zur Messung der Position eines Druckkolbens in einem Hauptzylinder beschrieben.

Ein weiterer induktiver Wegsensor ist aus der EP 2 428 773 A1 bekannt.

Weitergehende Entwicklungen beschreiben im nächsten Schritt asymmetrische Spulenkörper als Detektoren von magnetisierbaren Gebern im Nahfeldbereich, wobei die Länge des asymmetrischen Spulenkörpers durch die Länge der im Innern der Spule zu bewegenden Probe und dem Messweg bestimmt wird. Bei den bisherigen Spulenanordnungen ist die Spule länger als der Messweg und damit relativ lang, weshalb der Platzbedarf hoch ist.

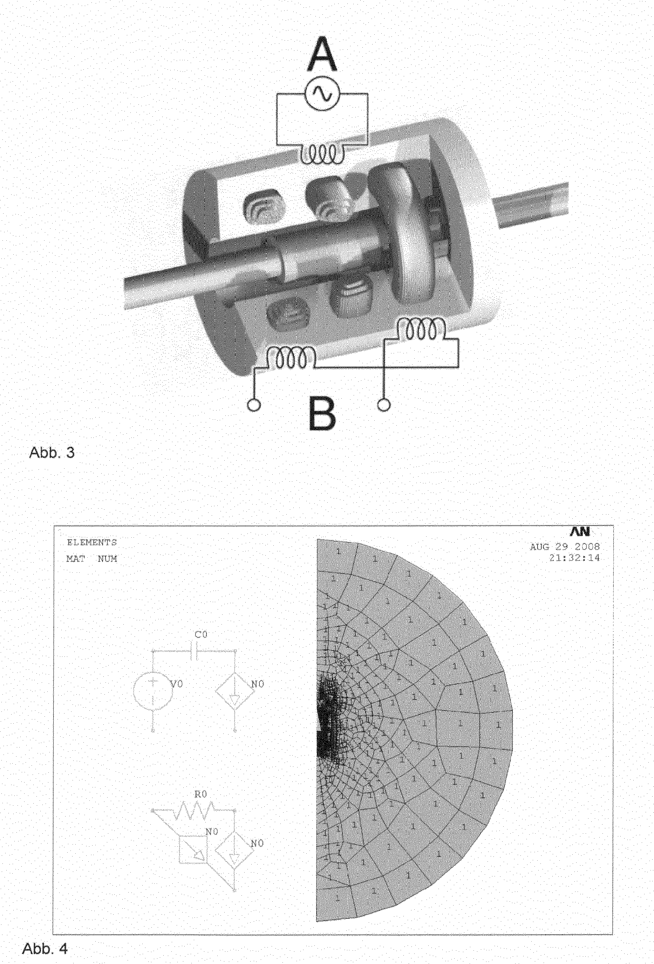

Die Grundlagen des Standes der Technik und der Einsatz von solchen Anordnungen werden im Folgenden beschrieben. Abb.3 zeigt einen LVDT (Linear Variable Differential Transformer) als analogen Sensor zur Wegmessung.

Er besteht aus einer Primärspule und zwei Sekundärspulen, welche nebeneinander auf einen gemeinsamen Spulenkörper aufgebracht werden. In der zentralen Bohrung des Spulenkörpers befindet sich ein weichmagnetisches Material, das sich frei bewegen kann. Vorteilhafterweise werden die beiden Sekundärspulen in entgegengesetzten Richtungen gewickelt, um eine positive oder negative sekundäre Ausgangsspannung zu erhalten und zwar in Abhängigkeit von der Verschiebung des Weicheisenkerns. Auf diese Weise wird die Bewegungsrichtung eindeutig festgelegt. Genau genommen haben wir es also mit einem Spannungsübertrager zu tun mit einem wegabhängigen Ausgangssignal. Dessen Bezeichnung lautet korrekt Linear Voltage Differential Transformer.

LVDTs sind der bevorzugte Weg, lineare Wegaufnehmer für raue Industrieumgebungen zu bauen. Dafür werden gute Simulationsmodelle benötigt, die auch alle Arten von Umweltstörgrößen behandeln können. Im Rahmen des BMWi-Förderprogrammes PRO INNO II wurden unter FKZ KU0568901RR7 präzise LVDT Simulationsmodelle entwickelt, die zu wesentlich neuen Erkenntnissen geführt haben. Diese Simulationsmodelle sind in der Lage, eine ganz neue Klasse von LVDTs zu definieren mit verbesserter Genauigkeit und einer Baulänge, welche den Messweg nur unwesentlich übersteigt.

Das Multi-Domain Physiksimulationssystem ANSYS ermöglicht u.a. die Definition und Berechnung aller wesentlichen Felder, wie sie in der Elektrotechnik allgemein üblich sind. Die grundsätzliche Aufteilung erfolgt in elektrische Strömungsfelder, elektrostatische Felder, magnetostatische Felder, quasistationäre elektromagnetische Felder und schließlich Wellenfelder. Elektrische und magnetische Felder werden in der Physik durch das System der Maxwellschen Gleichungen erschöpfend beschrieben.

Im Zuge der harmonischen Analyse kann die LVDT-Simulation auf die Berechnung von quasistationären elektromagnetischen Feldern zurückgeführt werden, Abb. 2.

Finite Elemente, welche Felder dieser Art beschreiben, müssen den Freiheitsgrad des magnetischen Vektorpotentials A haben (Ansys ax, ay, az) und die Materialeigenschaft der Permeabilität (in Ansys murx, mury, murz) sowie die Materialeigenschaft der Leitfähigkeit (in Ansys elektrischer Widerstand rsvx, rsvy, rsvz). Die elektromagnetische Flussdichte wird durch B (in Ansys bx, by, bz) erreicht.

In Ansys stehen die Strukturelemente PLANE13, PLANE53, SOLID 97 und SOLID117 für die Berechnung quasistationärer elektromagnetischer Felder zur Verfügung stehen. Alle diese Elemente haben zusätzlich die Möglichkeit, den Freiheitsgrad des elektrischen Skalarpotentials zu aktivieren, um rational unterschiedliche Bereiche (Leiter, Nichtleiter, Dielektrika) berechnen zu können. Weiterhin steht es dem Betrachter stets frei, die Methode der transienten nichtlinearen Simulation heranziehen, wenn die Sensoranordnung prinzipielle, z.B. materialbedingte Nichtlinearitäten aufweist, oder der Sensor einer Translations- und/oder Rotationsbewegung unterworfen wird. Bei Wegsensoren ist letzteres oft gegeben. Der Rechenaufwand steigt dabei beträchtlich an, stellt aber keine prinzipielle Hürde dar.

Abb. 4 zeigt eine Halbsymmetrie-Darstellung eines LVDT einschließlich der kompletten externen Beschaltung, nachdem die automatische Diskretisierung durchgeführt wurde.

Auf der oberen linken Seite sieht man den Primärspannungsgenerator, bestehend aus der sinusförmigen Spannungsquelle V0 mit Koppelkondensator C0. Das Koppelelement N0 verbindet den Ausgang der diskreten Spannungsquelle mit der Primärspule im Feldbereich auf der rechten Seite (siehe Abb. 3). Der untere Teil zeigt die externe Beschaltung der Sekundärspulen. Für jede der beiden Sekundärspulen S1 und S2 wird ein Koppelelement N0 verwendet wird, welches die Signale vom Feldbereich in den diskreten Schaltkreis überträgt. Zur Bildung der komplexen Differenzausgangsspannung wird der Messwiderstand R0 verwendet. Alle diskreten Schaltungselemente werden mit dem ANSYS Strukturelement CIRCU124 modelliert. In der rechten Hälfte von Abb. 4 sehen wir den LVDT eingebettet in seine halbkreisförmige Luftumgebung.

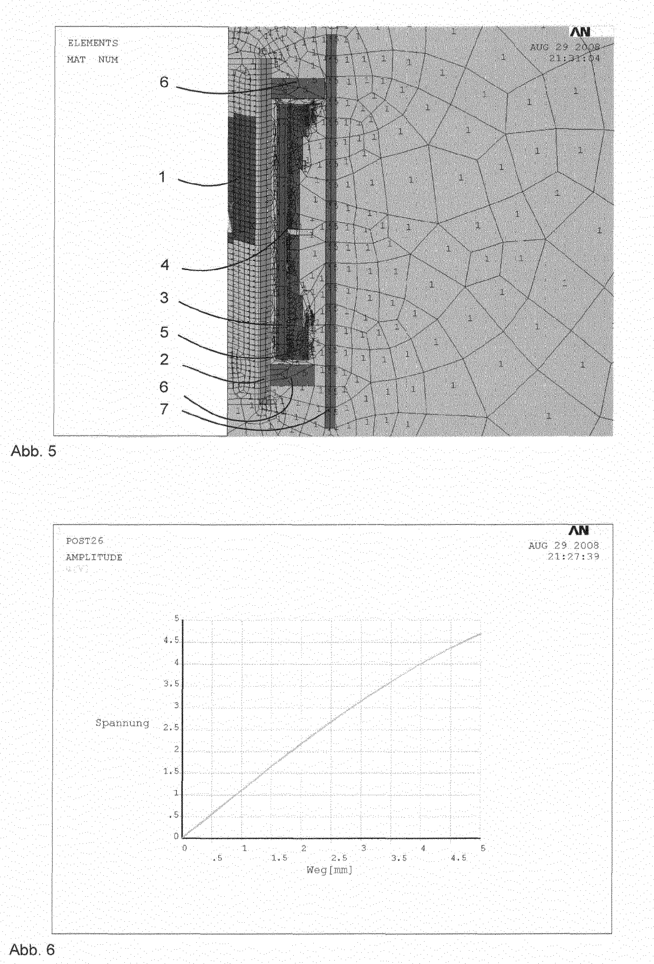

Abb. 5 zeigt eine Finite-Elemente Darstellung eines beispielhaften LVDT in Halb-Symmetrie. Kodierung der Materialzuweisung: Weicheisenkern (1), Edelstahl-Druckrohr (2), Primärspule (innen) (3) und Sekundärspulen (außen) (4) und (5), obere und untere Stirnscheiben (6), Gehäuse (7), Luftumgebung (8).

Die Sensorkennlinie U (s) zeigt einen ersten Eindruck der Sensorqualität gemäß Abb. 6, welche die Amplitude der komplexen Sensorausgangsspannung U als Funktion der Wegkoordinate s zeigt. Excel-Tabellen stellen die komplexe Ausgangsspannung des Sensors nach Betrag und Phase für die numerische Nachbearbeitung bereit. Offensichtlich gibt es in diesem Fall genügend Anlass, die Linearität der Sensorcharakteristik U (s) zu verbessern. ANSYS Goal Driven Optimization (GDO) ist eine Möglichkeit, die entsprechenden LVDT Entwurfsparameter kontinuierlich zu verbessern, bis ein Optimum erreicht wird. Es ist auch wichtig zu beachten, dass ein Multi-Domain Physik-Simulator, wie ANSYS, in der Lage ist, alle Quellen von Signalverschlechterung individuell zu reflektieren und sie den entsprechenden Bauteilen oder physikalischen Phänomenen zuzuordnen. Beispielsweise kann die Temperaturdrift der Sensorkennlinie durch geeignete Materialauswahl um mehr als eine Größenordnung verbessert werden.

Abb. 6 zeigt die Sensor Charakteristik |U| (s), die Amplitude der Sensorausgangsspannung U als Funktion der Wegkoordinate s. Die Wegkennlinie ist symmetrisch zum Ursprung des Koordinatensystems.

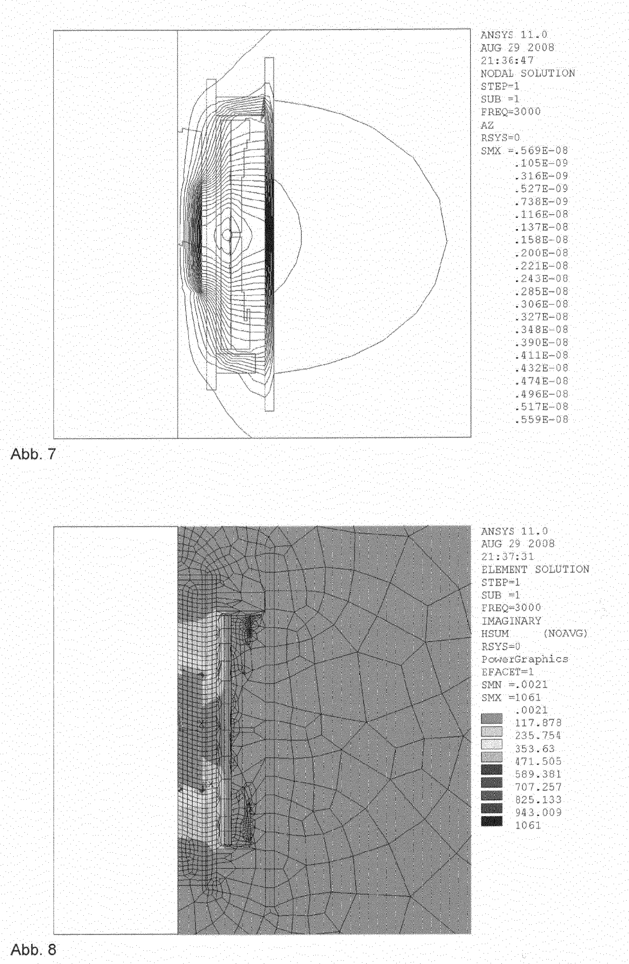

Natürlich wird ein hochwertiges Simulationssystem viele weitere Einsichten in die Physik der Sensorfunktion ermöglichen, indem man beispielsweise detaillierte Darstellungen der beteiligten elektromagnetischen Felder heranzieht. Abb. 7 bis 11 zeigen einen Auszug der verfügbaren Felddarstellungen.

Abb. 7 zeigt die Darstellung der magnetischen Feldlinien für den Beispiel-LVDT.

Abb. 8 zeigt den Betrag der magnetischen Feldstärke HSUM [A/m] aus Simulation des Beispiel-LVDT.

Abb. 9 zeigt den Betrag der elektromagnetischen Flussdichte BSUM [T] aus Simulation für den Beispiel-LVDT.

Abb. 10 zeigt den Vektor der magnetischen Feldstärke H [A/m] aus Simulation für den Beispiel-LVDT

Abb. 11 zeigt den Vektor der elektromagnetischen Flussdichte BSUM [T] aus Simulation für den Beispiel-LVDT.

Handelsübliche Bauformen von LVDTs arbeiten i.d.R. mit nebeneinanderliegenden Sekundärspulen, wie etwa in Abb. 5 gezeigt. Diese Bauform bietet den naheliegenden Ansatz, mittels großer Windungszahlen zu einer akzeptablen Wegauflösung zu kommen. Als Preis für diese Bauweise sind erstens zu nennen: die Baulänge L ist wenigstens doppelt so groß wie der Messweg 2*H. Damit lässt sich der LVDT z.B. nicht direkt in Hydraulik- oder Pneumatikzylinder einbauen. Zweiter Preis ist, dass die Wegkennlinie U(s), siehe Abb. 6, eine ausgeprägte Nichtlinearität im Bereich der Stirnscheiben aufweist.

Diese Nichtlinearität der Wegkennlinie kann durch eine tabellengestützte Operation eliminiert werden. Dies ändert allerdings nichts an dem Problem, dass die Wegkennlinie durch äußere Faktoren wie das Gehäuse beeinflusst wird.

Die Erfindung basiert auf der Idee der Definition des Wegsignals durch Vorgabe der elektromagnetischen Flussdichte im Raum.

Der neue Ansatz besteht darin, die elektromagnetische Flussdichte im Raum so zu gestalten, dass ihre Verteilung weder von der Form und Größe des Signalgebers noch vom Gehäuse oder dessen Grenzen abhängt. Dieser Ansatz reicht erheblich weiter als das eingangs beschriebene LVDT-Prinzip, insofern hiermit beliebige Wegkoordinaten im Raum erfasst werden können einschließlich lokaler Verfeinerung mittels so genannter Nonius-Spulen. Darunter fallen neben den einfachen axialen Zwei-Quadranten Weggebern sämtliche induktiven Vier-Quadranten-Weggeber, ebene und zylindrische induktive Winkelgeber, Linearkombinationen aus den vorgenannten Teilsystemen und neue Anwendungen der magnetischen Fernfeldmessung bei moderaten Signalfrequenzen.

Eine einfache Möglichkeit, die Wegkoordinate mittels der elektromagnetischen Flussdichte zu kodieren, besteht darin, die Dichte der elektrischen Leiter entlang des zu messenden Weges entsprechend dem gewünschten Wegsignal zu gestalten. Dies kann z.B. durch einen ansteigenden oder abnehmenden Windungsbelag in Form eines keilförmigen Wicklungsquerschnitts erfolgen oder allgemeiner durch eine progressive bzw. degressive Steigung der Wicklungsdrähte in allen, mehreren oder einer einzelnen Wicklungslage. Diese Kodierung kann mittels einer oder mehrerer Sekundärspulen erfolgen, oder auch der Primärspule, oder aller Teilspulen zusammen. In zusammengesetzten Spulenanordnungen, z.B. Vier-Quadranten Signalgeber kommen weitere benachbarte Spulenlagen hinzu.

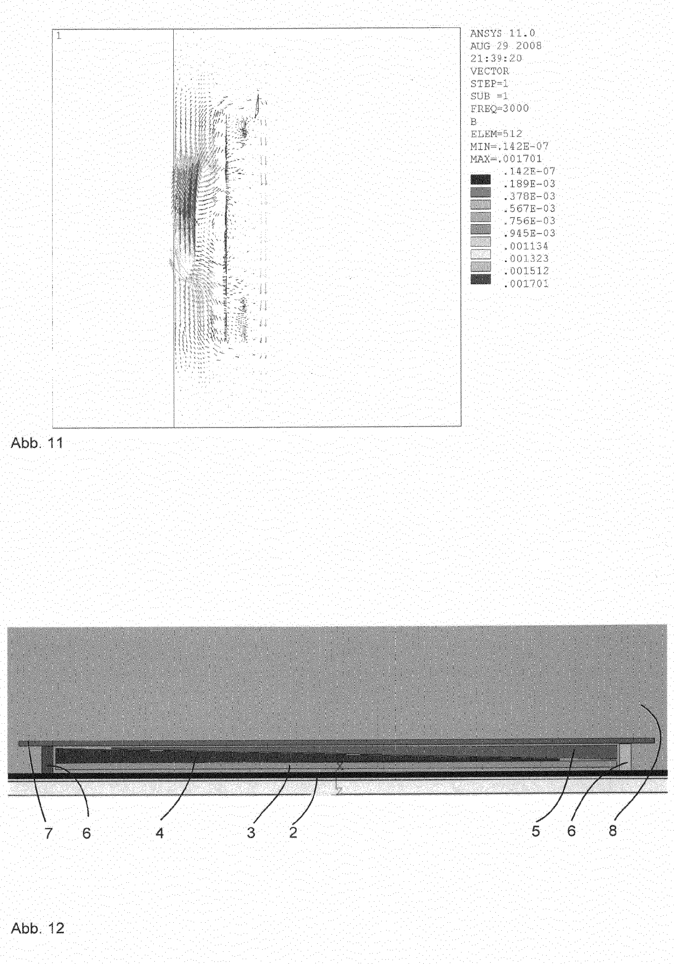

Abb. 12 zeigt eine einfache, neue LVDT-Anordnung, welche im Rahmen des BMWi-Förderprogrammes PRO INNO II unter FKZ KU0568901RR7 erstmals beschrieben wurde. Hier wird die Weginformation mittels progressiv zunehmender Windungszahlen der Sekundärspulen kodiert. Die Sekundärspulen sind hier symmetrisch zur Sensormitte. Die Finite-Elemente Darstellung dieses LVDT mit überlappenden Sekundärspulen in Halb-Symmetrie zeigt die Querschnittsflächendarstellung mit der Materialzuweisung: Edelstahl-Druckrohr (2), Primärspule (innen) (3), Sekundärspule 1 (links) (4), Sekundärspule 2 (rechts) (5), linke und rechte Stirnscheibe (6), Gehäuse (7), Luftumgebung (8).

Eine wesentliche Eigenschaft der kodierten Weginformation besteht darin, dass die Form und Größe des Signalgebers nicht entscheidend ist für die Wegcharakteristik U(s). Die Größe des Signalgebers hat lediglich Einfluss auf die maximale Größe, d.h. die Amplitude des Wegsignals.

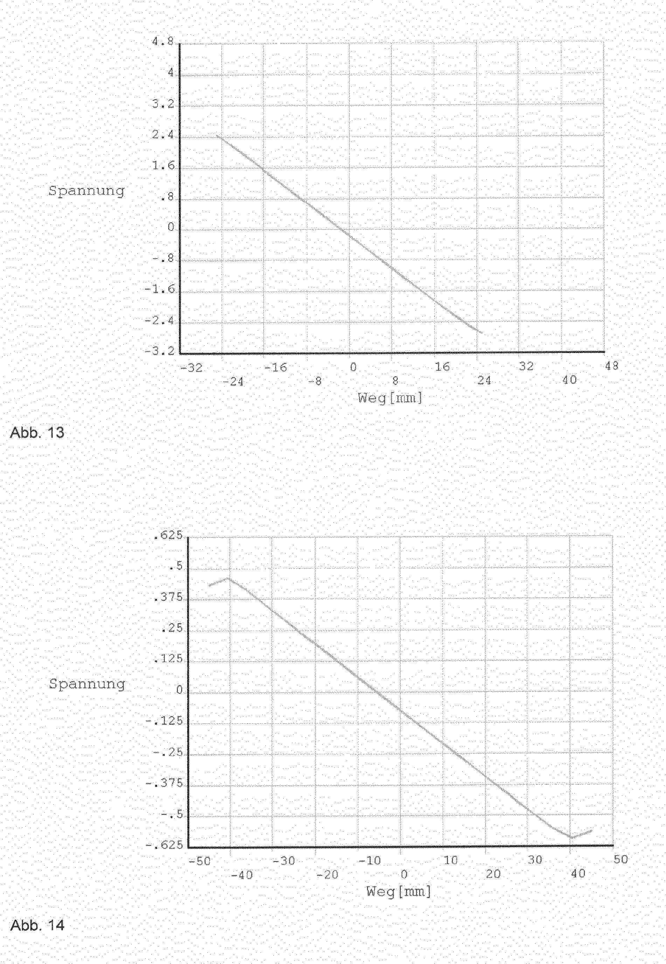

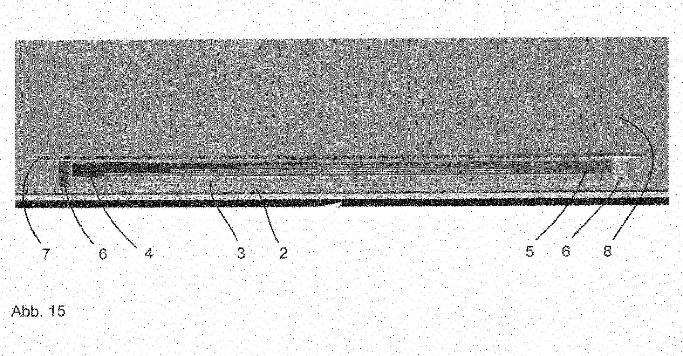

Abb.13 stellt die Sensorcharakteristik U(s) des induktiven Wegsensors aus Abb. 12 bei einem Signalgeber/Baulängenverhältnis von 0,5:1 dar. Die Kennlinie weist aufgrund der einfachen Konstruktion eine Nullpunktverschiebung auf (Ausgangsspannung Null fällt nicht mit der Sensormitte zusammen). Dieser Offset-Fehler kann z.B. durch Verschränkung der Sekundärspulen und/oder weitere Maßnahmen beseitigt werden, siehe hierzu Anordnung in Abb. 15.

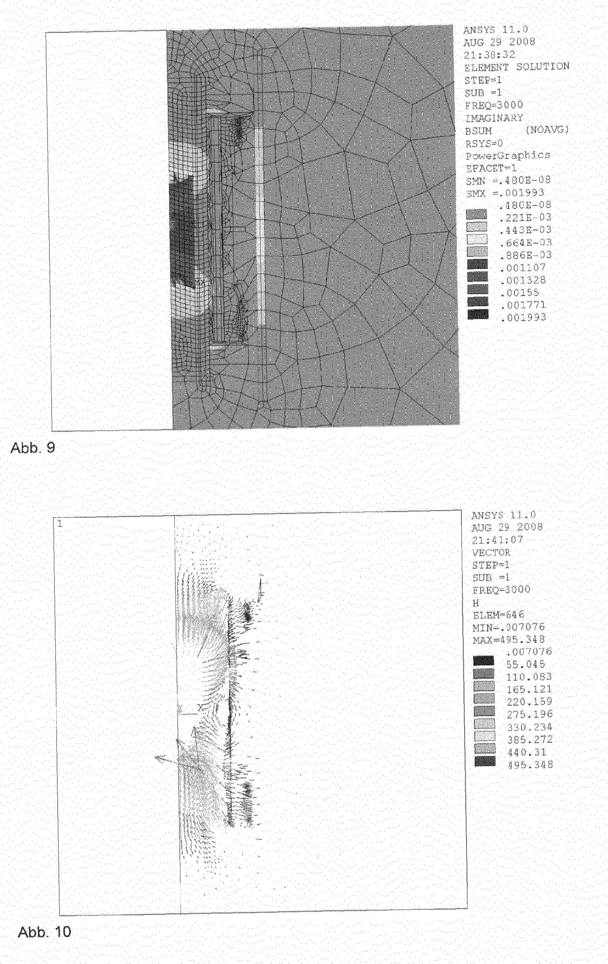

In Abb. 14 wird die Sensorcharakteristik U(s) des induktiven Wegsensors aus Abb. 10 bei einem Signalgeber/Baulängenverhältnis von 0,1:1 gezeigt. Der Signalgeber wurde links und rechts bewusst aus dem Spulenbereich entfernt (Kennlinienknicke), um zu zeigen, dass die Weginformation ausschließlich in der Ausführung der Sekundärspulen begründet ist. Man sieht, dass der prinzipielle Verlauf der Sensorcharakteristik erhalten bleibt, und die Größe des Signalgebers sich lediglich auf die Amplitude des Ausgangssignals auswirkt.

Abb. 15 zeigt die Finite-Elemente Darstellung eines LVDT mit verschränkten Sekundärspulen in Halb-Symmetrie z.B. zur Vermeidung von Nullpunktfehlern. Querschnittsflächendarstellung nach FKZ KU0568901RR7 mit Kodierung der Materialzuweisung: Edelstahl-Druckrohr (2), Primärspule (innen) (3), Sekundärspule 1 (links) (4), Sekundärspule 2 (rechts) (5), linke und rechte Stirnscheibe (6), Gehäuse (7), Luftumgebung (8).

Die Erfindung beschreibt eine grundlegende Vereinfachung für alle induktiven Leiteranordnungen durch eine Vereinheitlichung der Geometrie solcher Leiter mit Hilfe einer oder mehreren kurzgeschlossenen Sprossen-Leiter-Anordnungen, die sich unter Umständen gegenseitig beeinflussen mit jeweils mehreren kurzgeschlossenen Windungen im Raum, wobei die Summe der Kurzschlussströme zum eindeutigen Indikator der räumlichen Distanz und Positionierung eines zum Beispiel magnetisierbaren Objektes wird. Mit Hilfe von Lithografieverfahren und dünnen Folien sind solche Leiter-Sprossen-Anordnungen sehr einfach mit Hilfe von Druckverfahren herstellbar und können entweder eben im Raum angeordnet werden, oder beliebige aufgerollte oder spiralförmige Raumgestalt annehmen, die eine aufgewickelte oder spiralförmig gedrehte Folie erlaubt. Eine, mehrere oder beliebig viele solcher Leiter-Sprossen-Folien können beliebig im Raum angeordnet werden und wahlweise als Sensor(en) oder Geber dienen. Die Abstände der kurzgeschlossenen Sprossen im Raum können dabei äquidistant ausgeführt sein oder die Abstände variieren, zum Beispiel mit einem konstanten Faktor X wachsend. Der Abstand, die Länge und der Querschnitt der Kurzschlussstränge in Relation zueinander sind ebenfalls variabel, die Leiterholme können beliebig im Raum liegen und zum Beispiel trapezförmig ausgeführt sein oder aber beliebigen Kurven in der Ebene oder im Raum folgen, und die Kurzschlussstränge können mit sich änderndem Querschnitt ausgeführt sein. Diese Variationen können auch - wie zum Beispiel in Form eines beliebig dreidimensionalen Barcodes - gemischt auftreten.

Die Leiter-Sprossen-Anordnung beschreibt exemplarisch als neuen Anspruch die Anordnung kreuzungsfreier ebener und räumlicher Spulen durch kanonische Transformation.

Der neue Ansatz hat zum Ziel, die elektromagnetische Flussdichte im Raum so zu gestalten, dass ihre Verteilung weder von der Form und Größe des Signalgebers noch vom Gehäuse oder dessen Grenzen abhängt. Dazu werden entsprechend dem Nyquist-Abtasttheorem Leitermuster als Stützstellen so im Raum angeordnet, dass hiermit beliebige Wegkoordinaten erfasst werden können einschließlich lokaler Verfeinerung mittels Barcodes oder auch Nonius-Spulen. Dieser Ansatz kann sowohl induktiv als auch kapazitiv ausgeprägt sein und eignet sich unmittelbar für alle axialen Zwei-Quadranten Weggeber, sämtliche Vier-Quadranten-Weggeber, ebene und zylindrische Winkelgeber, Näherungssensoren und -Schalter, Linearkombinationen aus den vorgenannten Teilsystemen und neue Anwendungen der elektromagnetischen Fernfeldmessung bei moderaten Signalfrequenzen.

Eine wesentliche Voraussetzung für die maßhaltige Ausführung von elektromagnetischen Spulen im Raum sind hoch- und höchstauflösende Batch-Verfahren zur Herstellung von Leitermustern. Bevorzugt werden hierzu Produktionsverfahren, welche sich seit mehr als vier Jahrzehnten im Bereich der "Printed Circuits" etabliert haben (vgl. Verfahren der Dünnfilm- bzw. Dickfilmtechnik u.a. von der Globaltronics 2010, 13. - 15. September 2010, Singapur). Dazu zählen die klassischen mehrlagigen flexiblen Schaltungen, pastengestützte Offsetdruckverfahren auf Trägerfolien mit optionaler Ablösung der Trägerfolie bei der Montage, industrielle Tintenstrahltechniken, Dispensor-Tapes mit vormontierten Leitungsmustern für Bestückungsautomaten, u.v.a.m. Ein weiteres Ziel ist es, die Herstellung von Wicklungen elektromagnetischer Maschinen für extreme Antriebsleistungen mit diesen Methoden zu vereinfachen. Dazu kommen Wicklungen in Stanz- bzw. Rolltechnik oder aber in Spritzgusstechnik in Frage.

Die Herstellungsverfahren für "Printed Circuits" sehen mehrlagige flexible Leitermuster vor mit einer beschränkten Anzahl von Durchkontaktierungen zwischen einzelnen Lagen. Durchkontaktierungen sind jedoch vergleichsweise teuer und bei größeren Stromdichten sehr platzraubend. Als Folge dieser Ausgangssituation sind herkömmliche sequentielle Wicklungen in Drucktechnik für größere Leistungen nicht realistisch.

In der Elektrotechnik werden Strom- und Spannungsquelle als die grundlegenden Ersatzschaltungen zur Speisung passiver und aktiver Schaltungen als dual betrachtet. Die Aufgabe stellt sich, spannungsgeführte Spulen in äquivalente stromgeführte Spulen im Zuge einer kanonischen Transformation zu überführen. Die generelle Erwartungshaltung ist, dass sich beim Übergang vom Spannungsbereich in den Strombereich, die Urspannungen mit der Windungszahl verringern, und die Zweigströme bei gleichbleibender elektrischer Leistung mit der Windungszahl erhöhen. Des Weiteren wird erwartet, dass sich im Strombereich durch die dort verbreitete Parallelschaltung von Zweigströmen eine einfachere Verdrahtungsvorschrift ableiten lässt, welche möglicherweise zu drucktechnisch einfacheren Topologien im Sinne von "Printed Circuits" führt.

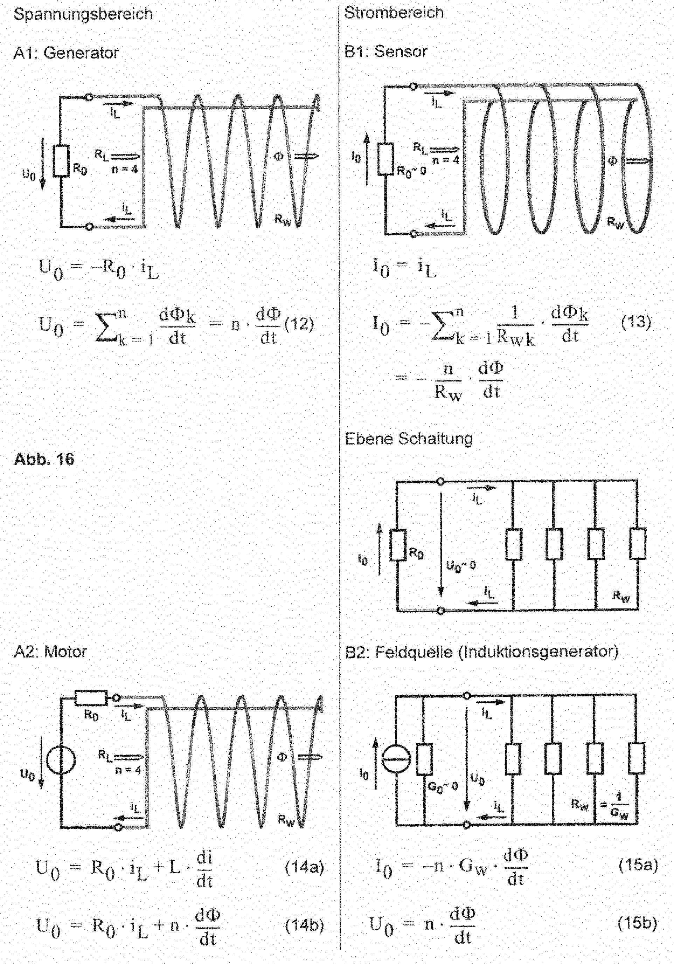

Abb. 16 zeigt die für die Überführung spannungsgeführter Spulen in äquivalente stromgeführte Spulen zu Grunde liegenden Gleichungssysteme. Wie man aus der Gegenüberstellung von Spannungsbereich und Strombereich entnehmen kann, lässt sich eine spannungsgeführte Spule gemäß Gleichung 12 in eine stromgesteuerte Spule gemäß Gleichung 13 überführen. Die beiden Gleichungen 12 und 13 gelten jeweils für den Einsatzfall eines Generators bzw. Sensors, bei welchen die innere Durchflutung zur Speisung einer außen angeschlossenen elektrischen Schaltung führt. Wie erwartet tritt die Windungszahl als gemeinsamer Skalierungsfaktor zwischen den beiden Domänen auf. Und in der Tat wird aus der Helixstruktur der spannungsgeführten Spule nun eine vollständig ebene Struktur, die sich jedem ebenen oder auch Rotations-Druckprozess trivialerweise entnehmen lässt. Je nach Widerstandsniveau der Drahtwindungen Rw in Gleichung 13 wird mit niederohmigen Sammelschienen gearbeitet. Die Auswertung des Sensorsignals erfolgt typischerweise bei der Signalklemmenspannung Null, also virtuellem Kurzschluss. Dieser virtuelle Kurzschluss kann mit niederohmiger Beschaltung erfolgen. Eine bewährte Methode ist der Anschluss der beiden stromgesteuerten Spulenklemmen an den Eingang eines Operationsverstärkers, welcher als Strom-/Spannungswandler beschaltet ist.

Gleichermaßen lässt sich eine spannungsgeführte Spule gemäß Gleichung 14a,b in eine stromgesteuerte Spule gemäß Gleichung 15a,b überführen. Die Gleichungen 14 und 15 gelten jeweils für den Einsatzfall eines Motors bzw. einer Feldquelle im Fall der Sensoranordnung, bei welchen die innere Durchflutung von einer außen angeschlossenen elektrischen Schaltung erzeugt wird. Auch hier tritt die Windungszahl als gemeinsamer Skalierungsfaktor zwischen den beiden Domänen auf und die Helixstruktur der spannungsgeführten Spule lässt sich ein weiteres Mal in eine vollständig ebene Struktur überführen.

Die kanonische Transformation von spannungsgeführten Spulen in solche mit Stromführung und umgekehrt ist eine grundlegende Abbildung aus der Schaltungstheorie, und kann aus diesem Grunde für beliebige Anwendungen eingesetzt werden. In Bezug auf die Wegmessaufgabe wird zunächst eine ebene gedruckte Schaltung diskutiert, welche ohne Einschränkung auch als Folienschaltung aufgebaut sein kann.

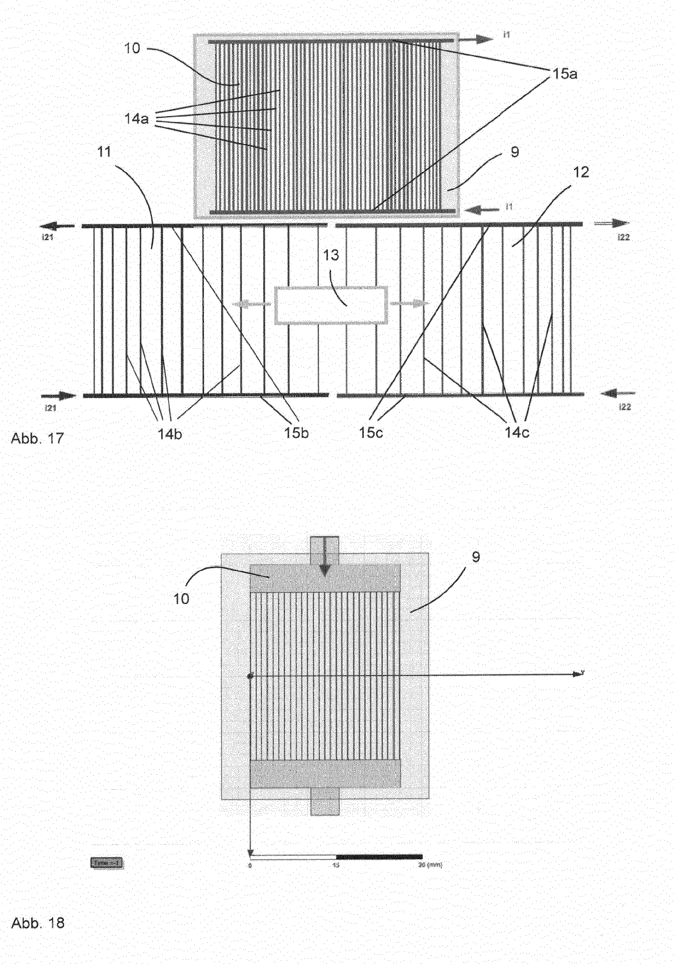

Als eine der vielen möglichen Ausführungsformen der Erfindung beschreibt Abb. 17 die Anordnung induktiver Wegsensoren mit ebenen Spulen und zeigt exemplarisch einen ebenen induktiven Wegsensor in Schichtbauweise mit insgesamt vier Lagen. Die Primärspule (10) in Lage 1 besteht aus einer Leiter-Sprossen-Anordnung bestehend aus Sprossen (14a), Holmen (15a) und einem auf den Holmen eingeprägten Wechsel-Strom i1. Die Primärspule arbeitet als Feldgenerator gemäß Gleichung 15a,b mit untenliegender Feldleitfolie (9) auf Basis Mu-Metall in Lage 0. Die erste Sekundärspule (11) in Lage 2 mit Leiter-Sprossen Anordnung bestehend aus Sprossen (14b), Holmen (15b) und einem auf den Holmen eingeprägten Wechsel-Strom i21 sowie die zweite Sekundärspule (12) in Lage 3 mit Leiter-Sprossen Anordnung bestehend aus Sprossen (14c), Holmen (15c) und einem auf den Holmen eingeprägten Wechsel-Strom i22 arbeiten als Wegsensoren, welche mit einer Weginformation in Form einer progressiv steigenden bzw. abnehmenden Leiterdichte kodiert sind. Alle vier Lagen werden senkrecht aufeinandergeschichtet **und sind gegeneinander isoliert.** In der obersten Lage 4 läuft ein freibeweglicher, weichmagnetischer Positionsgeber (13). Die Klemmen der beiden Sekundärspulen werden jeweils an einen getrennten Strom-/Spannungswandler angeschossen. Aus deren Ausgängen wird schlussendlich das Wegsignal durch Differenzbildung ermittelt. Im einfachsten Falle genügt es auch, die beiden Sekundärspulen parallel zu schalten. Die Stromdifferenz kann dann mit einer rein passiven Schaltung (Ohmwiderstand) gebildet werden.

Die Konfiguration des Wegsensors in Fig. 17 kann folgendermaßen erweitert werden:
a) Vier-Quadranten Wegsensor:
   - Lage 0: Mu-Metall
   - Lage 1: Primärspule um 45° gedreht
   - Lage 2: Sekundärspule 1
   - Lage 3: Sekundärspule 2
   - Lage 4: Kopie von Sekundärspule 1 um 90° gedreht (Sekundärspule 3)
   - Lage 5: Kopie von Sekundärspule 2 um 90° gedreht (Sekundärspule 4)
   - Lage 6: Positionsgeber, welcher in der gesamten Ebene (vier Quadranten) detektiert werden kann.
b) Vier-Quadranten Wegsensor als ebener Winkelgeber:
   - Lage 0: Mu-Metall
   - Lage 1: Primärspule um 45° gedreht
   - Lage 2: Sekundärspule 1
   - Lage 3: Sekundärspule 2
   - Lage 4: Kopie von Sekundärspule 1 um 90° gedreht (Sekundärspule 3)
   - Lage 5: Kopie von Sekundärspule 2 um 90° gedreht (Sekundärspule 4)
   - Lage 6: Positionsgeber, welcher über der gesamten Ebene rotiert.
c) Zwei-Quadranten Wegsensor als ebener Winkelgeber:
   - Lage 0: Mu-Metall als ebenes kreisförmiges Band ausgeführt
   - Lage 1: Primärspule als ebenes kreisförmiges Band ausgeführt
   - Lage 2: Sekundärspule 1 als ebenes kreisförmiges Band ausgeführt
   - Lage 3: Sekundärspule 2 als ebenes kreisförmiges Band ausgeführt
   - Lage 4: Positionsgeber, welcher entlang der kreisförmigen Bandstruktur rotiert.
d) Zwei-Quadranten Wegsensor als zylindrischer Winkelgeber:
   - Lage 0: Mu-Metall
   - Lage 1: Primärspule
   - Lage 2: Sekundärspule 1
   - Lage 3: Sekundärspule 2
   - Lage 4: Positionsgeber, welcher entlang des Zylindermantels rotiert.
   - Die gesamte Anordnung wird um die vertikale Achse in einen Zylinder mit 360° aufgerollt.
e) Vier-Quadranten Wegsensor als parabolförmiger Fernfeldsensor:
   - Lage 0: Mu-Metall
   - Lage 1: Primärspule um 45° gedreht
   - Lage 2: Sekundärspule 1
   - Lage 3: Sekundärspule 2
   - Lage 4: Kopie von Sekundärspule 1 um 90° gedreht (Sekundärspule 3)
   - Lage 5: Kopie von Sekundärspule 2 um 90° gedreht (Sekundärspule 4)
   - Lage 6: Metallischer Positionsgeber, in einiger Entfernung z.B. > 1 m.
   - Die gesamte Anordnung wird z.B. in einer parabolförmigen Schüssel mit Klebstoffen ausgehärtet,
   - Um eine elektromagnetische Richtcharakteristik zu erhalten. Diese kann bereits bei niedrigen Frequenzen einsetzen.

In Abb. 18 - 21 wird gezeigt, dass man ebene Sensoren nach der in Abb. 17 beschriebenen "Leiter-Sprossen" Anordnung genau so in der Virtuellen Realität aufbauen kann.

Abb. 18 zeigt dazu einen ebenen Wegsensor in "Leiter-Sprossen" Anordnung mit Lage 0: Abschirmfolie (9), Lage 1: Primärgitter als Einspeise-System.

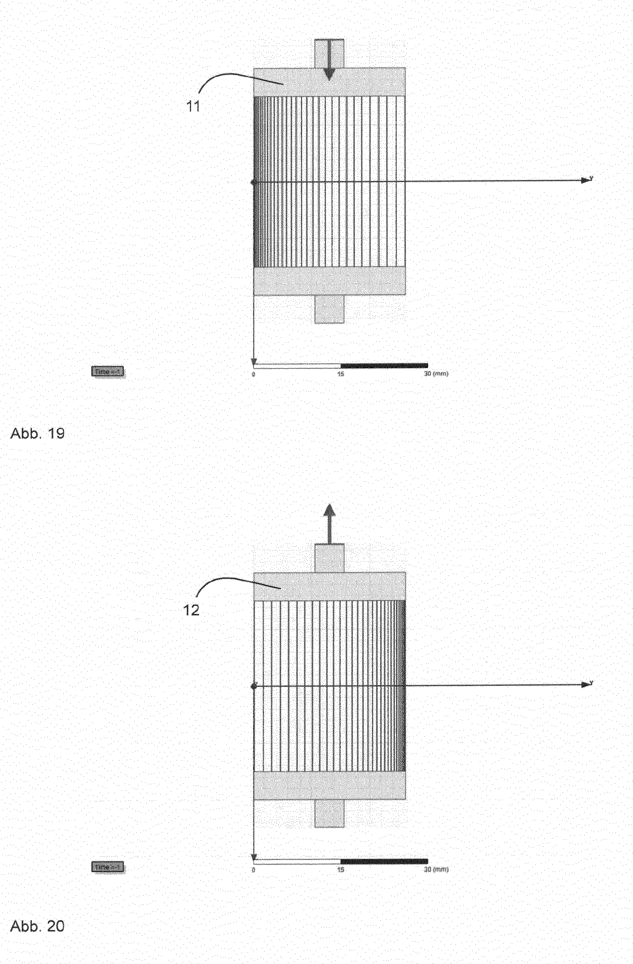

Abb. 19 beschreibt einen ebenen Wegsensor in "Leiter-Sprossen" Anordnung mit Lage 2: erstes Sekundärgitter.

Abb. 20 beschreibt einen ebenen Wegsensor in "Leiter-Sprossen" Anordnung mit Lage 3: zweites Sekundärgitter.

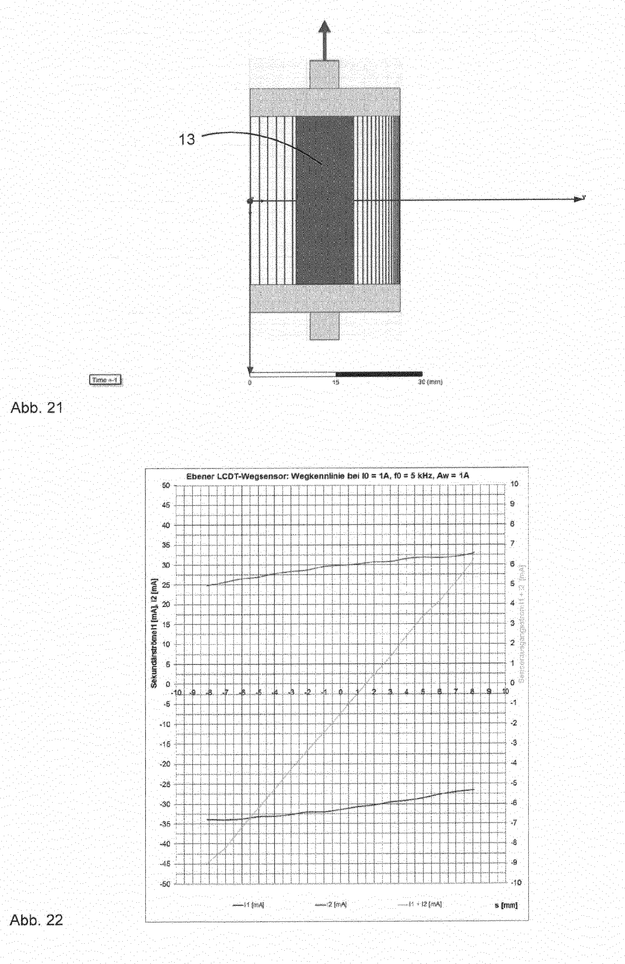

Abb. 21 beschreibt einen ebenen Wegsensor in "Leiter-Sprossen" Anordnung mit Lage 4: Geber (13) gezeigt über Lage 3: zweites Sekundärgitter. Die Ausdehnung des Gebers quer zur Bewegung in Richtung der y-Achse ist für die Aufgabe der Wegmessung nicht entscheidend, solange sein Wirkungsquerschnitt Aσ, d.h. seine projizierte Fläche auf die Lagen 1 bis 3, während der Bewegung konstant bleibt. Alle in den Abb. 17 bis Abb. 21, Abb. 23, Abb. 25 und Abb. 27 sowie Abb. 30 bis 37 gezeigten Anordnungen wurden mit Hilfe von rechnergestützten Simulations-Workflows gerechnet und auf die gewünschte bzw. geplante Wirkungsweise und Funktionalität geprüft und somit virtuell bzgl. ihrer Funktionalität validiert.

Das gleiche gilt für jede beliebige alternierende geometrische Ausführungsform von mehrlagigen Leiter-Sprossen-Konfigurationen.

Abb. 22 zeigt die berechnete Wegcharakteristik eines ebenen induktiven Wegsensors in 2D-Drucktechnik in "Leiter-Sprossen" Anordnung gemäß Abb. 18 bis Abb. 21: Sensor Charakteristik I(s). Duale, ebene kreuzungsfreie Form zu LVDT-Wegsensor in Abb. 12 mit Leitergittern bei erheblich besserer Linearität. I1 ist der Signalstrom im Sekundärgitter 1, I2 ist der Signalstrom im Sekundärgitter 2, (I1 + I2) ist der Summenstrom der beiden Sekundärgitter mit der erwarteten linearen Wegcharakteristik. Anders als in Abb. 15 wurden hier noch keinerlei Korrekturmaßnahmen auf die beiden Sekundärgitter angewandt. Im Vergleich zum LVDT in Abb. 15 kommt dieser stromgeführte Wegsensor mit einem Bruchteil der elektrischen Betriebsleistung aus. Der rechnerische "Windungsbelag" des Primärgitters liegt lediglich bei Aw = 1A.

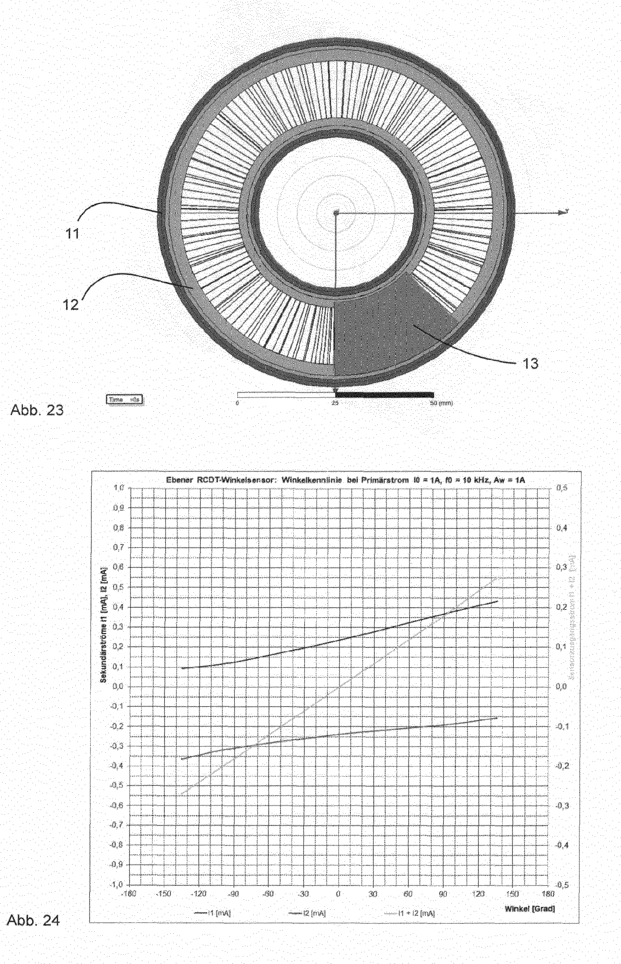

Abb. 23 zeigt anschaulich, wie aus dem ebenen Wegsensor in "Leiter-Sprossen" Anordnung gemäß Abb. 18 bis Abb. 21 durch Polarkoordinatentransformation ein ebener Winkelsensor entsteht, welcher alle vier Quadranten abdeckt und weiterhin als Resolver für kontinuierliche Rotationsbewegungen eingesetzt werden kann. Abb. 23 zeigt die Sicht auf die beiden Sekundärgitter und den Winkelgeber, der um den Mittelpunkt des Polarkoordinatensystems rotiert. Das Primärgitter und die Abschirmfolie entsprechend zu Abb. 18 liegen dahinter. Rotationssymmetrische Strukturen erlauben eine ideale Formulierung der Randbedingungen für elektromagnetische Felder. Beispielsweise können hier die Elektroden für die Einspeisung der Ströme in die Primär- und Sekundärgitter sehr schlank gehalten werden. Dadurch ist es z.B. eher möglich, kleine Strukturen für einen erweiterten Frequenzbereich zu entwerfen. Abb. 24 zeigt beispielhaft eine analog dazu berechnete Winkelcharakteristik.

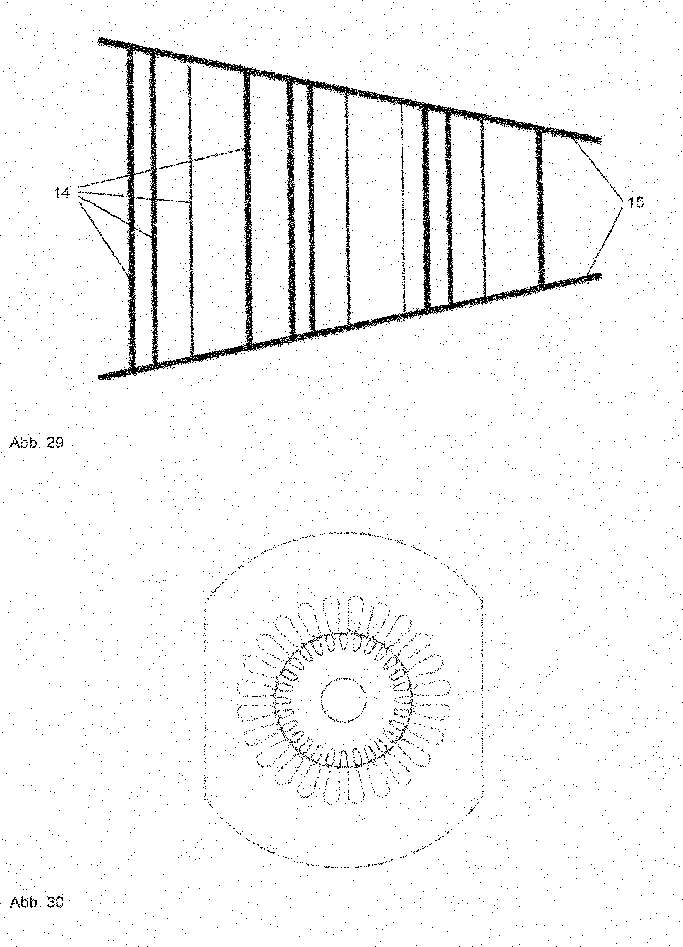

Leiter-Sprossen-Strukturen können je nach Größe des abzudeckenden Raumes nahezu beliebig ausgedehnt sein und damit sehr groß werden. Aus praktischen Gründen ist es in solchen Fällen sinnvoll, Sender- und Empfängersysteme entweder periodisch sequentiell, hierarchisch und/oder in Matrixform anzuordnen. Die notwendige Identifikation bzw. Unterscheidung mehrfacher Leiter-Sprossenbasierter Sender und Empfänger kann z.B. mit Barcode-Etiketten erfolgen, welche unterschiedliche Kodierungen aufweisen über die Varianz von Abstand und Querschnitt der Sprossen, unter Umständen in Verbindung mit z.B. trapezförmig oder sonstwie kurvenförmig angeordneten Holmen. Abb. 29 zeigt eine prinzipielle Darstellung eines trapezförmigen Barcode-Etiketts mit zugehörigen Sprossen (14) und Holmen (15).

Eine weitere mögliche Ausführungsform wird im Folgenden in Form von induktiven Wegsensoren mit kreuzungsfreien zylindrischen Spulen beschrieben.

Aus Gleichung 13 geht hervor, dass stromgesteuerte Spulen auch in Form einer Serien-/Parallelschaltung möglich sind. Dazu wird in Gleichung 13 jede Einzelwindung mehrere Male durchlaufen, bevor die Kurzschlussschienen kontaktiert werden. Der Sinn dieser Anordnung für Sensoren ist es, eine höhere Durchflutung zu erzielen. Außerdem werden durch diese Maßnahmen die Einzelwindungen hochohmiger, sodass in aller Regel auf einen Operationsverstärker zur Auswertung des Sensorsignals verzichtet werden kann. Damit werden auch Leistungsschaltungen in kreuzungsfreier Technik möglich. D.h., diese Methode ist auf Feldquellen und sämtliche Induktionsgeneratoren anwendbar, und ganz allgemein für den Bau von elektromagnetischen Maschinen bei niedrigen Impedanzen geeignet.

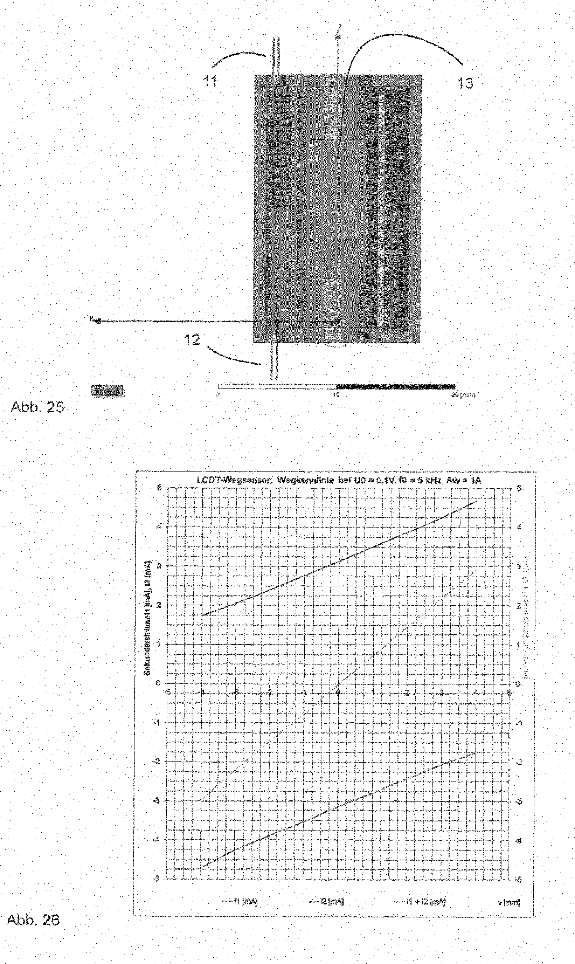

Abb. 25 zeigt einen zylindrischen induktiven Wegsensor in 2D/3D-Rolltechnik mit drei Windungen je Wicklungsschleife, jeweils für die obere Sekundärspule (11) bzw. für die untere Sekundärspule (12), Signalgeber (13), Primärspule nicht dargestellt. Der Axialschnitt zeigt eine duale kreuzungsfreie Form zu LVDT-Wegsensor aus Abb. 5 mit Halbspulen bei erheblich verbesserter Linearität.

Die verbesserte Linearität eines zylindrischen induktiven Wegsensors in 2D/3D-Rolltechnik mit drei Windungen je Wicklungsschleife ist in Abb. 26 dargestellt. Die Sensor Charakteristik I(s) kommt auf folgende Weise zustande: I1 ist der Signalstrom in der Sekundärspule 1, I2 ist der komplementäre Signalstrom in der Sekundärspule 2, (I1 + I2) ist der Summenstrom der beiden Sekundärspulen mit der erwarteten linearen Wegcharakteristik. Anders als in Abb. 5 wurden hier noch keinerlei Korrekturmaßnahmen auf die beiden Sekundärspulen angewandt. Im Vergleich zum LVDT in Abb. 5 kommt dieser stromgeführte Wegsensor mit einem Bruchteil der elektrischen Betriebsleistung aus. Der rechnerische Windungsbelag der Primärwicklung liegt lediglich bei Aw = 1A.

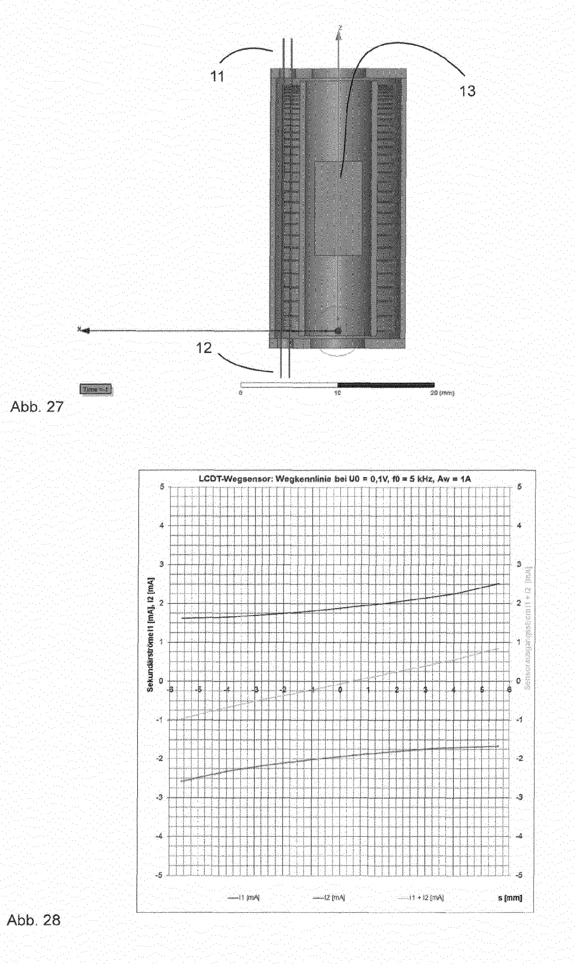

Abb. 27 zeigt einen zylindrischen induktiven Wegsensor in 2D/3D-Rolltechnik mit drei Windungen je Wicklungsschleife, jeweils für die obere Sekundärspule (11) bzw. für die untere Sekundärspule (12), Signalgeber (13), Primärspule nicht dargestellt. Der Axialschnitt zeigt eine duale kreuzungsfreie Form zu LVDT-Wegsensor aus Abb. 15 mit vollständig verschränkten Sekundärspulen bei erheblich verbesserten Linearität, die in Abb. 28 dargestellt ist. Die Sensor Charakteristik I(s) ergibt sich wie folgt: I1 ist der Signalstrom in der Sekundärspule 1, I2 ist der gegenläufige Signalstrom in der Sekundärspule 2, (I1 + I2) ist der Summenstrom der beiden Sekundärspulen mit der erwarteten linearen Wegcharakteristik. Anders als in Abb. 15 wurden hier noch keinerlei Korrekturmaßnahmen auf die beiden Sekundärspulen angewandt. Im Vergleich zum LVDT in Abb. 15 kommt dieser stromgeführte Wegsensor mit einem Bruchteil der elektrischen Betriebsleistung aus. Der rechnerische Windungsbelag der Primärwicklung liegt lediglich bei Aw = 1A.

Eine weitere mögliche Anwendungsform für kreuzungsfreie ebene und räumliche Spulen wird im Folgenden für den Einsatz in Induktionsmaschinen beschrieben.

Wie oben bereits ausgeführt wurde, sind stromgesteuerte Spulen auch in Form einer Serien-/Parallelschaltung möglich. Dazu wird in Gleichung 13 jede Einzelwindung mehrere Male durchlaufen, bevor die Kurzschlussschienen kontaktiert werden. Die Anzahl der Umläufe ist nur durch den verfügbaren Wicklungsbauraum begrenzt. Der Sinn dieser Anordnung für Induktionsmaschinen ist es, eine höhere Durchflutung zu erzielen bei gleichzeitig niedriger Impedanz. Außerdem werden durch diese Maßnahmen die Einzelwindungen hochohmiger, sodass in aller Regel auf Leistungsverstärker zur Einprägung von Strangströmen verzichtet werden kann. Auch ergeben sich deutlich geringere Anforderungen an die Stromschienenverteiler. Damit werden insbesondere Leistungsschaltungen in kreuzungsfreier Technik möglich, welche sehr leicht eingebaut und auch nachträglich gewartet werden können. D.h., diese Methode ist auf Feldquellen aller Art und sämtliche Induktionsgeneratoren anwendbar, und ganz allgemein für den Bau von schnelllaufenden elektromagnetischen Maschinen und Energiewandlern auch mit großen Leistungen geeignet.

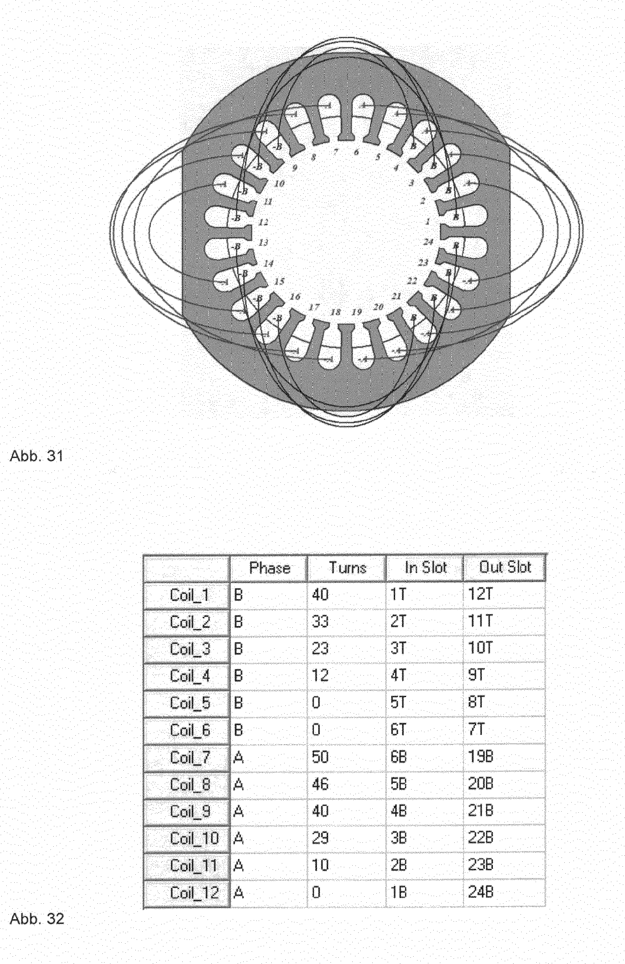

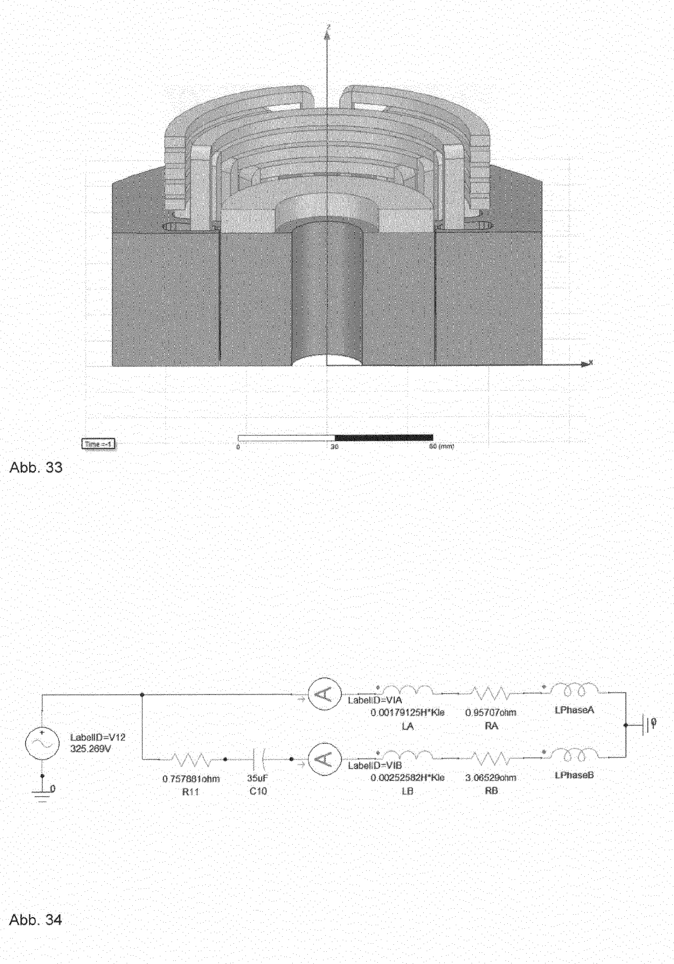

In den Abb. 30 bis 37 wird beispielhaft ein zweisträngiger Asynchronmotor beschrieben. Abb. 30 zeigt den zugehörigen ebenen Blechschnitt für einen Innenläufer mit 28 Nuten. Der Stator weist 24 Nuten auf. Bei diesem sehr verbreiteten Motor beträgt der Winkelversatz als elektrischer Winkel ausgedrückt alpha = 90°. Die Strangachsen liegen also senkrecht zueinander, wie in Abb. 31 ersichtlich. Der eine Strang, der sogenannte Hauptstrang wird direkt ans Netz geschaltet, der zweite Strang der sogenannte Hilfsstrang meistens über einen Kondensator entsprechend Abb. 34. Die Auslegung der Wicklungen im Haupt- und Hilfsstrang geschieht oft mittels sinusförmiger Windungszahlen, z.B. den Turns in Abb. 32, unterschiedlich ausgeführt für den Hauptstrang (Phase A) und den Hilfsstrang (Phase B).

Abb. 33 zeigt einen Viertelschnitt des zweisträngigen Asynchronmotors entlang der Rotationsachse. Hier sind die Wickelköpfe der Hauptwicklungen A (außen) und der Hilfswicklungen B (innen) zu sehen und ebenfalls der Kurzschlußring der Käfigwicklung im Innenläufer.

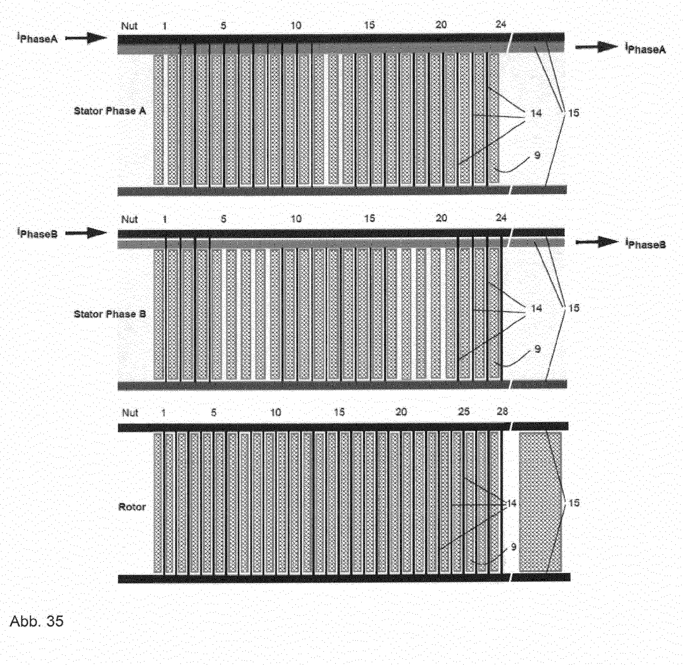

Die Abb. 35 zeigt insgesamt drei "Leiter-Sprossen" Anordnungen, welche die traditionellen Wicklungen dieses zweisträngigen Asynchronmotors ersetzen sollen. Die beiden oberen, jeweils gedoppelten "Leiter-Sprossen" Anordnungen zeigen die Abwicklung genau eines Statorumlaufs für den Hauptstrang (Phase A, oben) bzw. den Hilfsstrang (Phase B, Mitte). Der Strangstrom der Phase A fließt dabei über den Holm oben links zu, durchquert den Stator in positiver Richtung nach unten (Nuten A2 - A11) und durchquert weiterhin nach Aufsammlung im unteren Holm den Stator in negativer Richtung nach oben (Nuten A14 - A23) und verläßt schließlich diese 360°-Abwicklung nach rechts. Im einfachsten Falle endet der untere Holm nach 360°, und die beiden oberen Holme werden ausgekreuzt, sodaß sich die Leiterstruktur modulo 360° wiederholt. In diesem Falle erhält man eine Parallel-/Serienschaltung je 360°-Segment und Impedanzverhältnisse, welche denen eines klassisch gewickelten Stators für einen Asynchronmotor nahe kommen. Im allgemeinen Fall werden alle drei Holme analog zur Abwicklung des Rotors im unteren Drittel von Abb. 35 solange durchgezogen, bis sämtliche Wicklungslagen durchlaufen sind. Die Impedanz der rein parallelen "Leiter-Sprossen" ist niedriger. Die Beschreibung der "Leiter-Sprossen" Anordnungen für den Hilfsstrang ergibt sich analog.

Ganz allgemein kann man die diskutierten "Leiter-Sprossen" Strukturen entweder auf einem Trägerband realisieren, das optional bei der Bewicklung des Motors abgezogen werden kann (reines Transportband). In diesem Fall wird die gedoppelte Struktur als Vorder- und Rückseite ein- und desselben Bandes realisiert. Dabei lassen sich auch ferromagnetische Schichten (9) aufbringen, sodass ein Stator durch einfache Aufwicklung zweier solcher Bänder, je eines für Phase A und Phase B, entsteht. Für den Rotor wird nur ein einziges Band benötigt. Bei Asynchronmotoren hoher Leistung ist es vorteilhaft, die "Leiter-Sprossen" Strukturen als Endlos-Stanzteile zu realisieren, die im Falle der Statorwicklungen in Längsrichtung mittig gefaltet werden. Für die magnetische Feldführung kommen dann für den Stator bzw. Rotor gebräuchliche Blechpakete aus Elektroblech bzw. Formteile aus Ferrit zum Einsatz.

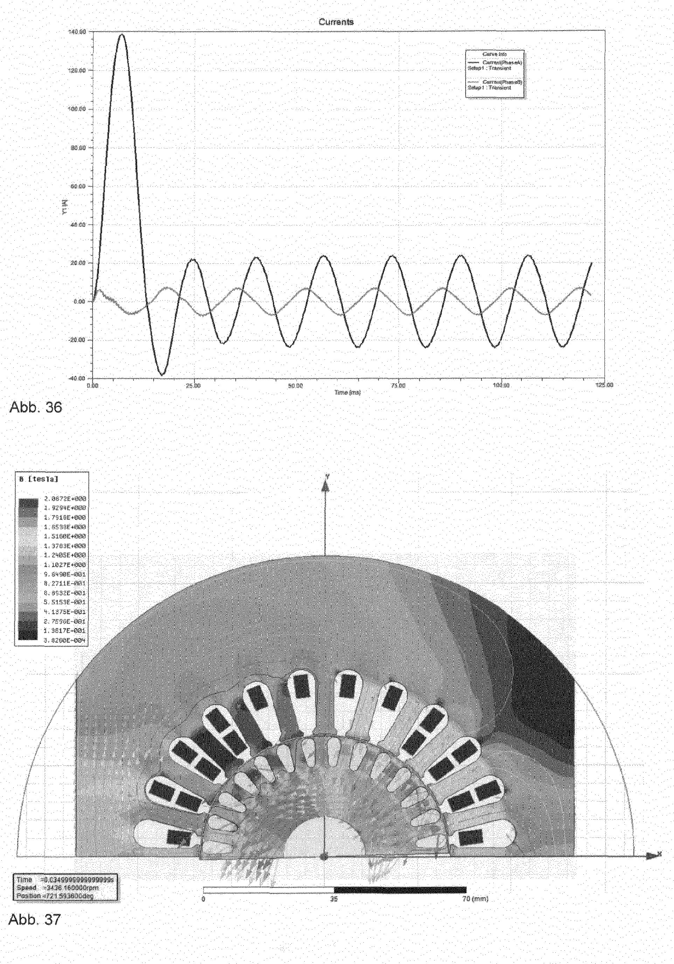

Zur Illustration der Arbeitsweise eines bandgewickelten Asynchronmotors sollen der numerisch ermittelte transiente Stromverlauf für die beiden Phasen A und B in Abb. 36 dienen (sieben 60-Hz Perioden) sowie eine Momentaufnahme aus dem transienten Verlauf der vektoriellen elektromagnetischen Induktion für den Zeitpunkt t = 35 ms.

## Patentansprüche

1. Ein induktiver Wegsensor zur Bestimmung der Position eines weichmagnetischen Positionsgebers (13), der entlang einer linearen oder kreisförmigen Bewegungsrichtung beweglich ist, wobei der Wegsensor folgende Merkmale aufweist:
a. eine Primärspule (10), die sich in einer ersten Lage befindet und die als Feldgenerator arbeitet,
b. eine ebene erste Leiteranordnung (11) in einer zweiten Lage, wobei die Leiteranordnung zwei entlang der Bewegungsrichtung parallel zueinander verlaufende elektrisch leitende erste Holme (15b) und Sprossen (14b) aufweist, wobei die Holme über die Sprossen miteinander elektrisch leitend verbunden sind, wobei die Sprossen senkrecht zur Bewegungsrichtung verlaufen, wobei die Leiteranordnung von einer Seite ausgehend in einer Richtung entlang der Bewegungsrichtung progressiv abnehmende Abstände benachbarter Sprossen aufweist,
c. eine ebene zweite Leiteranordnung (12) in einer dritten Lage, wobei die Leiteranordnung zwei weitere entlang der Bewegungsrichtung parallel zueinander verlaufende elektrisch leitende zweite Holme (15c) und Sprossen (14c) aufweist, wobei die Holme über die Sprossen miteinander elektrisch leitend verbunden sind, wobei die Sprossen senkrecht zur Bewegungsrichtung verlaufen, wobei die Leiteranordnung in der Richtung entlang der Bewegungsrichtung progressiv zunehmende Abstände benachbarter Sprossen aufweist,
d. wobei der weichmagnetische Positionsgeber (13) in einer vierten Lage beweglich ist,
e. wobei in den ersten zwei Holmen ein erster Wechselstrom (i21) eingeprägt wird, der gleich einem ersten Kurzschluss-Summenstrom (i21, I_{L}) ist,
f. wobei in den zweiten zwei Holmen ein zweiter Wechselstrom (i22) eingeprägt wird, der gleich einem zweiten Kurzschluss-Summenstrom (i22, I_{L}) ist,
g. wobei die ersten zwei Holme (15b) über einen ersten Strom-Spannungswandler miteinander über einen sehr kleinen elektrischen Widerstand kurzgeschlossen sind,
h. wobei die zweiten zwei Holme (15c) über einen zweiten Strom-Spannungswandler miteinander über einen sehr kleinen elektrischen Widerstand kurzgeschlossen sind,
i. wobei die Lagen senkrecht aufeinander geschichtet sind,
j. wobei der erste Strom-Spannungswandler mittels des ersten Kurzschluss-Summenstroms (i21, I_{L}) ein erstes Ausgangssignal liefert,
k. wobei der zweite Strom-Spannungswandler mittels des zweiten Kurzschluss-Summenstroms (i22, I_{L}) ein zweites Ausgangssignal liefert,
l. wobei die Differenz des ersten und zweiten Ausgangssignals einen eindeutigen Rückschluss auf die räumliche Position des Positionsgebers (13) zulässt.

## Claims

1. An inductive path sensor for determining the position of a soft-magnetic position transmitter (13) which is movable along a linear or circular direction of movement, the path sensor showing the following features:
a. a primary coil (10) which is in a first layer and which works as a field generator,
b. a flat first conductor arrangement (11) in a second layer, wherein the conductor arrangement shows two electroconductive first holms (15b) and rungs (14b), running parallel to each other along the direction of movement, wherein the holms are electroconductively connected with each other via the rungs, wherein the rungs run perpendicularly to the direction of movement, wherein the conductor arrangement shows progressively decreasing distances between adjacent rungs, starting from a side in a direction along the direction of movement,
c. a flat second conductor arrangement (12) in a third layer, wherein the conductor arrangement shows two further electroconductive second holms (15c) and rungs (14c) running parallel to each other along the direction of movement, wherein the holms are electroconductively connected with each other via the rungs, wherein the rungs run perpendicularly to the direction of movement, wherein the conductor arrangement shows progressively increasing distances between adjacent rungs in the direction along the direction of movement,
d. wherein the soft-magnetic position transmitter (13) is movable in a fourth layer,
e. wherein in the first two holms a first alternating current (i21) equal to a first short-circuit total current (i21, i_{L}) is impressed,
f. wherein in the second two holms a second alternating current (i22) equal to a second short-circuit total current (i22, i_{L}) is impressed,
g. wherein the first two holms (15b) are short-circuited with each other via a first current-to-voltage converter, via a very small electric resistance,
h. wherein the second two holms (15c) are short-circuited with each other via a second current-to-voltage converter, via a very small electric resistance,
i. wherein the layers are perpendicularly layered on each other,
j. wherein the first current-to-voltage converter supplies a first output signal by means of the first short-circuit total current (i21, i_{L}),
k. wherein the second current-to-voltage converter supplies a second output signal by means of the second short-circuit total current (i22, i_{L}),
l. wherein the difference between the first and second output signal permits an unique conclusion upon the spatial position of the position transmitter (13).

## Revendications

1. Un capteur de déplacement inductif pour déterminer la position d'un transmetteur de position magnétique doux (13), qui est déplaçable le long d'une direction de déplacement linéaire ou circulaire, dans lequel le capteur de déplacement présente les caractéristiques suivantes:
a. une bobine primaire (10) qui est dans une première couche et qui fonctionne comme un générateur de champ,
b. un premier agencement plat de conducteurs (11) dans une deuxième couche, dans lequel l'agencement de conducteurs présente deux premiers montants (15b) et échelons (14b), dans lequel les montants sont connectés l'un à l'autre de manière électriquement conductrice via des échelons, dans lequel les échelons s'étendent perpendiculairement à la direction de déplacement, dans lequel l'agencement de conducteurs présente des espacements d'échelons adjacents maigrir progressivement, à partir d'un côté, dans une direction le long de la direction de déplacement,
c. un deuxième agencement plat de conducteurs (12) dans une troisième couche, dans lequel l'agencement de conducteurs présente deux autres deuxièmes montants (15c) et échelons (14c), qui s'étendent parallèlement l'un à l'autre le long de la direction de déplacement, dans lequel les montants sont connectes électriquement passant par les échelons, dans lequel les échelons s'étendent perpendiculairement vers direction de déplacement, dans lequel l'agencement de conducteurs présente des espacements d'échelons adjacents augmentant progressivement dans la direction le long de la direction de déplacement,
d. dans lequel le transmetteur de position magnétique doux (13) est mobile dans une quatrième couche,
e. dans lequel un premier courant alternatif (i21) égal à un premier courant total de court-circuit (i21, i_{L}) est imprimé dans les deux premiers montants,
f. dans lequel un second courant alternatif (i22) égal à un second courant total de court-circuit (i22, i_{L}) est imprimé dans les deux deuxièmes montants,
g. dans lequel les deux premiers montants (15b) sont court-circuités l'un à l'autre via un premier convertisseur courant en tension via une très faible résistance électrique,
h. dans lequel les deux deuxièmes montants (15c) sont court-circuités l'un à l'autre via un deuxième convertisseur courant en tension via une très faible résistance électrique,
i. dans lequel les couches sont empilées perpendiculairement les unes aux autres,
j. dans lequel le premier convertisseur courant en tension fournit un premier signal de sortie au moyen du premier courant total de court-circuit (i21, i_{L}),
k. dans lequel le deuxième convertisseur courant en tension fournit un deuxième signal de sortie au moyen du deuxième courant total de court-circuit (i22, i_{L}),
l. dans lequel la différence entre le premier et le deuxième signal de sortie permet de tirer une conclusion sans équivoque sur la position spatiale du transmetteur de position (13).
